(19) Europäisches Patentamt
European Patent Office
Office européen des brevets

(11) **EP 2 280 369 A1**

(12) **EUROPÄISCHE PATENTANMELDUNG**

(43) Veröffentlichungstag:
**02.02.2011 Patentblatt 2011/05**

(51) Int Cl.:
***G06K 17/00*** *(2006.01)*

(21) Anmeldenummer: **09164845.1**

(22) Anmeldetag: **08.07.2009**

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**
Benannte Erstreckungsstaaten:
**AL BA RS**

(71) Anmelder: **Siemens Schweiz AG
8047 Zürich (CH)**

(72) Erfinder:
• **Schmid, Rolf
8800 Thalwil (CH)**
• **Sprich, Olaf
8914 Aeugst a.A. (CH)**

(74) Vertreter: **Kley, Hansjörg
Siemens AG
Patentabteilung
Postfach 22 16 34
80506 München (DE)**

(54) **Verfahren und System zur Lokalisierung eines RFID-Tags**

(57)    Die bisher einzig bekannte Möglichkeit einer präziseren Lokalisierung von aktiven RFID-Transpondern sind Lösungen, bei welchen mittels Laufzeitmessung und Vergleich dieser Daten mit bekannten Daten von Referenzpunkten die entsprechenden Koordinaten berechnet werden. Zur Lösung dieses Problems wird ein Verfahren und System zur Ortsbestimmung (100, 70; G-10, G-11, .. ) eines einem Objekt (50) zugeordneten RFID-Tags (60), vorgeschlagen, bei dem
- auf einer ersten Frequenz Meldungen (msg, $msg_0$) zwischen RFID-Tags (60) und einem Controller (40) bidirektional ausgetauscht werden, wobei die Meldungen vom RFID-Tag (60) zum Controller eine das RFID-Tag kennzeichnende Information enthalten und der Controller (40) mit einem Hintergrundsystem (80) verbunden ist, das den Austausch der bidirektionalen Meldungen (msg, $msg_0$) steuert.

Zusätzlich werden von einer Mehrzahl von Excitern (E-10, E-11, .. ) auf einer zweiten gegenüber der ersten tieferen Frequenz ein individuelles Kennzeichen (Id-10, Id-11) der Exciter (E-10, E-11, ..) ausgesendet. Ein im Nahfeld eines Exciters (E-10, E-11, .. ) befindliches RFID-Tag (60) empfängt das Kennzeichen (Id-10, Id-11) des betreffenden Exciters (E-10, E-11, ..) und dieses Kennzeichen (Id-10, Id-11, .. ) wird vom RFID-Tag (60) in einer Meldung ($msg_0$) auf der ersten Frequenz zum Controller (40) übertragen. Mit im Hintergrundsystem (80) gespeicherten Datensätzen, die die Lage der Exciter (E-10, E-11, .. ) repräsentieren, wird der Ort (100, 70; G-10, G-11, .. ) des betreffenden RFID-Tags (60) bestimmt.

FIG 1

EP 2 280 369 A1

## Beschreibung

Die vorliegende Erfindung betrifft ein Verfahren zur Lokalisierung eines RFID-Tags nach dem Oberbegriff des Patentanspruchs 1 sowie ein System zur Lokalisierung eines RFID-Tags nach dem Oberbegriff des Patentanspruchs 8.

Die aktive RFID-Technologie wird zur Auszeichnung von Fahrzeugen, Aufliegern, Containern (=Wechselbehältern), Transport- und Rangiermitteln (Bsp. Anhänger auf Flughafen für Koffer, Fracht etc.) eingesetzt. Durch die aktive RFID-Technologie können die Fahrzeuge identifiziert und auch geortet werden. Meist ist aber eine Ortung nur für Zonen (=virtueller Raum, gebildet durch ein Lesefeld) von wenigen bis mehreren hundert Quadratmetern möglich. Eine genauere Ortung lies diese einfache und günstige Technologie bisher nicht zu. Somit ist bisher z.B. auch eine präzise Detektion, welches Fahrzeug an welcher Andockstelle, einer mehrere Andockstellen umfassende Rampe, nicht möglich.

Bisherige Lösungen für das vorgenannte Beispiel basieren auf Verfahren wie Nummernschild-Erkennung, Mitteilung durch Personal über Funk etc. Die bisher einzig bekannte Möglichkeit einer präziseren Lokalisierung von aktiven RFID-Transpondern sind Lösungen, bei welchen mittels Laufzeit- oder Feldstärkemessung und Vergleich dieser Daten mit bekannten Daten von Referenzpunkten die entsprechenden Koordinaten berechnet werden. Diese Systeme sind sehr kostenintensiv - sowohl was die Initialisierungskosten - als auch die Hardware-Kosten betrifft. Ein Messung der Feldstärke ist höchst ungenau und wegen sich dauern ändernden Umgebungsparametern untauglich.

Insgesamt besteht bei diesen nun sehr gebräuchlichen Erfassungstechnologien allerdings auch immer der Anspruch, dass die hierfür eingesetzten Komponenten und Verfahren einfach ausgestattet sein sollen und mit nur vergleichsweise geringen Investitionskosten eingerichtet werden sollen.

Der Stand der Technik weist genau diese Nachteile des hohen Aufwandes für die Realisierung auf. Beispielsweise ist in WO 2008/100430 A1 [1] ein «Range and tag finder» offenbart, der auf folgendem Prinzip beruht: Ein integriertes Gerät in einer Anlage weist zwei Empfänger auf: Ein erster Empfänger für den Empfang eines RFID-Signals und einen zweiten Empfänger für die Bestimmung des Ortes, z.B. mittels GPS-Technologie. Die GPS-Technologie ist jedoch innerhalb von Gebäuden nicht anwendbar.

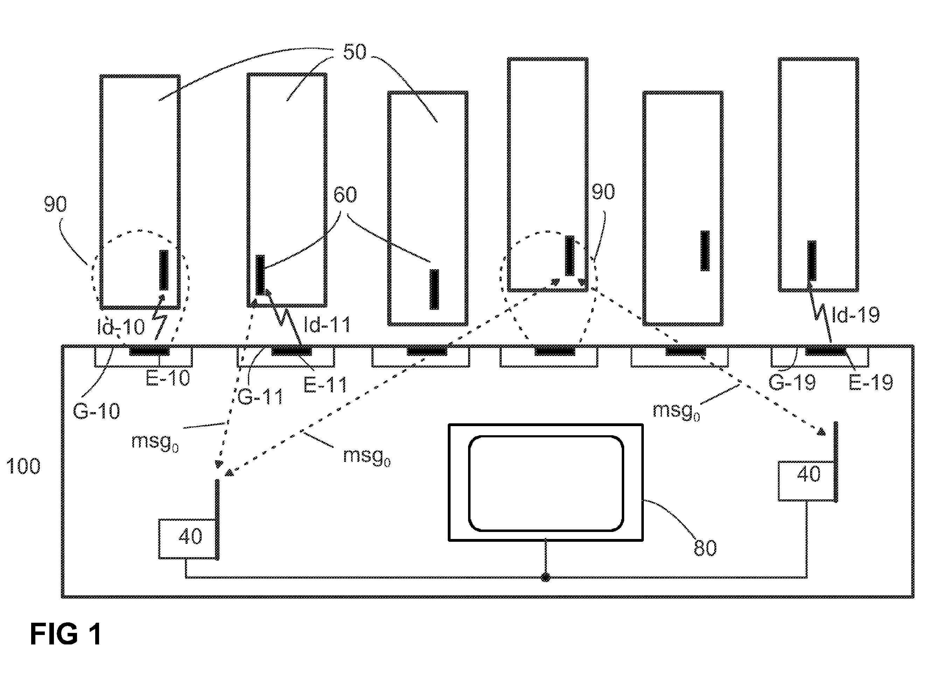

In US 2002/0153996 A1 [2] ist ein Verfahren und System offenbart, mit dem die von einem Tag ausgesendeten Telegramme hinsichtlich Aussendungsrate; Telegrammlänge (engl. Duration) und Aussendungspegel gesteuert werden können. Dazu empfangen die Tags über eine niederfrequente Funkstrecke die entsprechenden Informationen, vgl. [2] Fig. 1 low frequency receiver. Mit diesen Informationen werden die Einstellung für die Aussendung auf der höheren Frequenz für den Sender auf dem Tag (vgl. [2], Fig 1, UHV transmitter) vorgenommen. Damit können insbesondere regulatorische Vorgaben hinsichtlich Emission solcher Tags dynamisch eingestellt und somit eingehalten werden.

Aus EP 1 210 693 B1 [3] ist eine Lösung zur Erfassung eines elektronischen Billets bekannt, die auf folgendem Grundprinzip beruht:

Bei Eintritt in einen Wagen oder Zone wird das elektronische Billet mit einem niederfrequenten Feld geweckt, typisch 13.56MHz oder 27MHz aus dem ISM-Band. Das auf dieser Frequenz übermittelte Telegramm enthält Timing-Informationen für eine nachfolgende bidirektionale Kommunikation auf einer höheren Frequenz, typisch 868MHz. Auf dieser höheren Frequenz erfolgt ein Telegrammaustausch für die Feststellung einer Anwesenheit in einem Wagen bzw. Zone. Diese Lösung aus dem Jahr 1999 musste getroffen werden, da die damalige Technologie noch nicht eine so hohe Autonomie ermöglichte. So mussten diese elektronischen Tickets nach einer gewissen Inaktivitätszeit wieder in einen energiesparenden Schlafmodus zurück fallen.

Im Sinne dieser Schrift umfasst der Begriff «genaue Ortung» das Feststellung der tatsächlichen Sequenz oder Reihenfolge von mit RFID-Tags versehenen Objekten oder die Ortung eines solchen Objektes im Bereich von bis etwa 5m.

Der vorliegenden Erfindung liegt daher die Aufgabe zugrunde, ein Verfahren und ein System zur genauen Ortung eines mit einem RFID-Tag versehenen Objektes anzugeben, das weitgehend auf die bekannten und kommerziell verfügbaren Komponenten aufsetzt und mit einem Minimum an Aufwand realisierbar ist.

Diese Aufgabe wird gelöst für ein Verfahren zur genauen Ortung gemäss den im Patentanspruch 1 angegebenen Merkmale gelöst und für das System gemäss den im Patentanspruch 8 angegebenen Merkmale. Vorteilhafte Ausgestaltungen der Erfindung sind in weiteren Ansprüchen angegeben.

Die Grundidee der Erfindung basiert auf folgendem «Zusatz» zu den bekannten Systemen:

An vorgegebenen Stellen, an denen die mit einem RFID-Tag versehenen Objekte geortet werden sollen oder die Sequenz von mit RFID-Tags versehenen Objekten festgestellt werden soll, wird ein handelsübliches Gerät - im folgenden Exciter genannt - platziert. Dieser Exciter sendet auf einer relativ tiefen Frequenz (z.B. 13.56MHz, aus dem ISM-Band) ein Signal bzw. Telegramm aus. Dieses Telegramm enthält neu eine eineindeutig kennzeichnende Identität ID des betreffenden Exciters. Im Sinne der Schrift [2] - siehe dort z.B. Fig. 1 - ist der hier genannte Exciter ein «Low frequency transmitter». Diese von einem RFID-Tag empfangende Identität ID wird gemäss Protokollregeln an einem bestimmten Ort (pay load) der vom RFID-Tag auf der höheren Frequenz ausgesendeten Telegramme eingefügt. Der für diese Zone vorgesehene Controller oder Reader empfängt diese Telegramme. Da der Ort des Exciters mit seiner spezifischen Identität ID durch seine feste Installation bekannt ist, kann nun in einem Hintergrundsystem mit dem vom Reader empfangenen Telegramm der Ort des betreffenden RFID-Tags auf einfache Weise (und sehr genau) bestimmt werden. Die Genauigkeit ergibt sich durch eine Einstellung des Exciters hinsichtlich Pegel und Frequenz. Die Frequenz bestimmt das Nahfeld gemäss der groben Formel, also unter Vernachlässigung der Dimension der Sendeantenne:

$$S_{nah} < \lambda/2\Pi \; ;$$

$$S_{nah} < \lambda \cdot 0{,}16 \; .$$

$\lambda$ steht für die Wellenlänge des vom Exciter ausgesendeten (Magnet-)feldes. Quelle der vorstehend angegebnenen Grössenordnung zwischen Nah- und Fernfeld siehe z.B. AIM [4].

Durch die Verwendung handelsüblicher Komponenten kann die Erfindung besonders kostengünstig realisiert werden. Dazu braucht es lediglich eine Anpassung der Software/Firmware auf den betreffenden RFID-Tags.

Die Erfindung wird nachfolgend anhand der Zeichnung beispielsweise näher erläutert. Dabei zeigen:

Figur 1

Beispiel einer ersten Anwendung der Erfindung für eine Rampe, an der Lastwagen für die Beladung/Entladung parkiert werden, sogenannte Andockstellen;

Figur 2

Beispiel einer zweiten Anwendung der Erfindung für einen Kommissionierplatz, bei dem Waren als solche oder Waren auf einem Ladungsträger auf einem Förderband herangeführt werden.

Figur 1 zeigt eine erste Anwendung der vorliegenden Erfindung an einer Rampe 100. Die Rampe 100 als Teil eines Umschlagplatzes weist sogenannte Tore oder Gates G-10, G-11, .. G-19 auf. Die Anzahl ist unerheblich, in der Figur 1 sind vom Prinzip her mal 10 solcher Gates dargestellt. Jedes Gate wird mit einem Exciter E-10, E-11, .. , E-19 versehen. Beim Exciter E-10 ist qualitativ ein Wirkungsbereich 90 eines Nahfeldes dargestellt. Aus den bekannten Dimensionen eines Lastwagens 50, z.B. Breite 2.30m CH-Norm, 2.50m EU-Norm ist unschwer abzuleiten, dass die Frequenz für einen solchen Wirkungsbereich als f = 13.56MHz zu wählen ist. Andere Frequenzen im Bereich 10 bis etwa 20 MHz stehen aus regulatorischen Gründen (z.B. BAKOM) nicht zur Verfügung. Die nächst höhere Frequenz von 27.12 MHz ist aus «Distanzgründen» (=Wirkungsbereich 90 des Nahfeldes) hier weniger geeignet. Innerhalb dieses Wirkungsbereiches 90 ist allenfalls noch eine Reduktion mit einer entsprechenden Pegeleinstellung der Sendeleistung des Exciters E-10, E-11, usw. vorzunehmen. Aus Übersichtlichkeitsgründen sind in Figur 1 nur zwei solcher Wirkungsbereiche 90 eingetragen, ein ebensolcher Wirkungsbereich 90 ergibt sich jedoch auch für alle anderen Exciter E-11, ...

Jeder Lastwagen 50 ist mit einem RFID-Tag 60 versehen. Jedes RFID-Tag 60 hat eine eineindeutige Identität. Bei der Installation dieser Tags wird diese eineindeutige Identität dem betreffenden Lastwagen zugeordnet und in einem rechnergestützten Logistikzentrum erfasst. Diese Daten stehen auch dem Hintergrundsystem 80 gemäss der vorliegenden Figur 1 zur Verfügung. Dieses Hintergrundsystem ist mit Controllern 40 verbunden, um den Meldungsverkehr mit den RFID-Tags 60 auf einer höheren Frequenz (höher als die vorgenannten 13.56 MHz) zu steuern. Aus wiederum regulatorischen Gründen stehen zur Zeit für die höhere Frequenz folgende Werte zur Verfügung:

- 868 MHz;
- 2.45 GHz.

Die Exciter E-10, E-11, .. senden in einer festgelegten Periodizität ihre entsprechendes Kennzeichen Id-10, Id-11, .. aus. Anstelle einer periodischen Aussendung kann diese auch vom Hintergrundsystem 60 initiiert werden. Dies ist abhängig von der konkreten Anwendung. Sobald sich ein Lastwagen 50, der ein RFID-Tag 60 enthält, einem Tor G-nn nähert, empfängt das betreffende RFID-Tag 60 auf der «tiefen» Frequenz ein Telegramm mit der Identität Id-nn des betreffenden Tors G-nn; nn ist hier ein Platzhalter, wie die Identitäten vergeben werden, z.B. als Grössen in 8-Bitdarstellung, ist für die Erfindung unerheblich.

Das RFID-Tag 60 übernimmt diese Identität Id-nn und sendet es als Meldung msg zum Controller 40. Diese vom Controller 40 empfangene Meldung wird dem Hintergrundsystem 80 zugeleitet. Zu beachten ist, dass die Meldungen msg von einem RFID-Tag 60 stets die Identität des betreffenden RFID-Tags 60 beinhalten. Somit kann auf dem Hintergrundsystem 80 mit den Identitäten von RFID-Tag 60 und Identität des Gates G-nn die Identität des betreffenden Lastwagens 50 eruiert werden. Mit dieser Information kann in einem späteren Verfahrensschritt die Be- oder Entladung dieses Lastwagens eingeleitet werden, ggf. automatisiert.

Es kann ferner vorgesehen werden, dass in der vom RFID-Tag 60 zum Controller 40 übertragenen Meldung eine Gültigkeitsdauer des übermittelten Kennzeichen des Exciters E-10, E-11 enthalten ist. Ebenso kann vom Hintergrundsystem ausgelöst eine Meldung vom Controller 40 an das betreffende RFID-Tag 60 eine Quittierung der empfangenden Kennzeichen Id-10, Id-11, ..

Die von den RFID-Tags 60 ausgesendeten Meldungen msg wie auch $msg_0$ können auch von mehr als einem Controller 40 empfangen werden. Da die Controller 40 mit dem Hintergrundsystem 80 verbunden sind, ist letzteres in der Lage, einen sogenannten Mehrfachempfang von Meldungen msg auszufiltern. Die Controller sollen - gerade hinsichtlich einer kostengünstigen Lösung - keine Intelligenz in Form besonderer Auswertungen der empfangenen oder ausgesendeten Meldungen msg aufweisen.

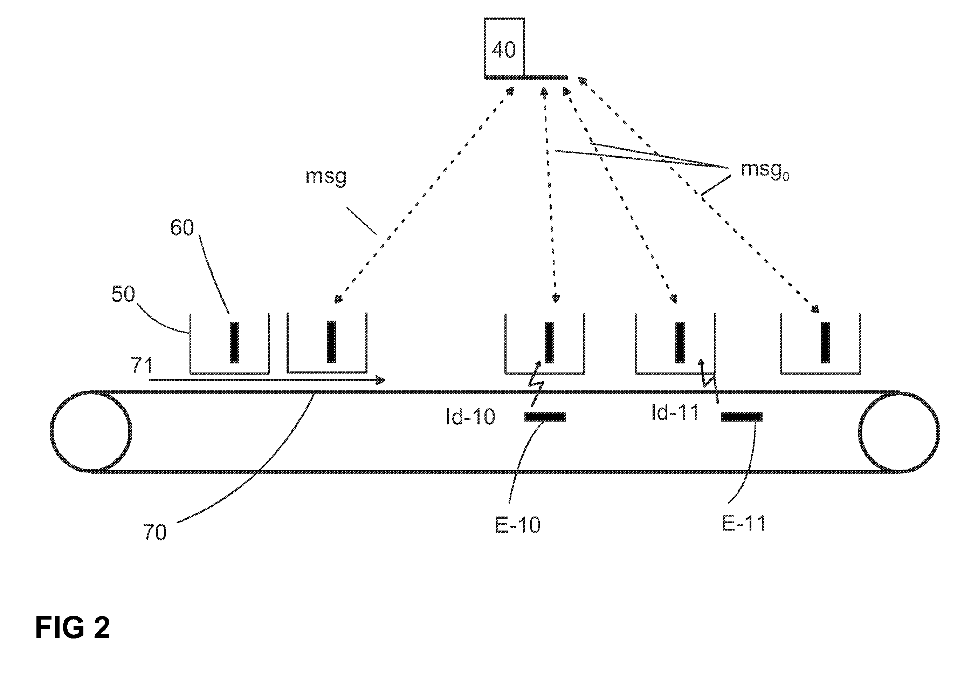

Figur 2 zeigt einen Kommissionierplatz, bei dem die Waren 50 oder ein Ladungsträger 50 mit darauf befindlichen Waren 50 auf einem Förderband 70 herangeführt werden. Hier wird nicht genau unterschieden bezüglich der Ware 50 oder eines Containers/Ladungsträger 50, da dies für die Wirkungsweise der vorliegenden Erfindung unerheblich ist. Unter dem Förderband 70 oder neben dem Förderband 70 ist wenigstens ein Exciter E-10 platziert. Von diesen wenigstens einem Excitern E-10 und ggf. einem weiteren Exciter E-11, .. werden periodisch oder ggf. durch ein Steuersystem ausgelöst entsprechende Kennzeichen Id-10, Id-11 ausgesendet. Die Auslösung der Aussendung kann auch dadurch erfolgen, dass die sich dem Exciter E-11, .. nähernden Objekte 50 mit einem Näherungsschalter oder mit einem äquivalenten Mittel wie z.B. einer Lichtschranke erkannt werden. Die Exciter E-10 und E-11 senden entsprechend der vorgenannten Möglichkeiten entsprechende Kennzeichen Id-10 bzw. Id-11. die Aussendung kann dabei gestaffelt erfolgen. Diese Kennzeichen Id-10 bzw. Id-11 werden von den sich den Excitern E-11, .. nähernden RFID-Tags 60 empfangen. Die RFID-Tags 60 senden nun Meldungen msg enthaltend die Identität des betreffenden RFID-Tags 60 und die Identität der empfangenen Exciter-Kennzeichen Id-10 bzw. Id-11. Ein Hintergrundsystem 80 - nicht dargestellt in Figur 2 - steuert mit diesen vom Controller 40 empfangen Meldungen msg die Kommissionierung.

Die vorliegenden zwei Beispiele zeigen eine typische Anwendung der vorliegenden Erfindung. Die Erfindung kann überall dort angewendet werden, wo mit RFID-Tags 60 versehene Objekte 50 in einem Bereich von wenigen Metern geortet werden müssen. Abhängig von den Dimensionen/Ausdehnungen können im Rahmen der regulatorischen Vorgaben die Frequenzen und Pegel für den Wirkungsbereich der von den Excitern E-10, E-11, .. , ausgesendeten Kennzeichen eingestellt werden.

**Liste der verwendeten Bezugszeichen und Abkürzungen.**

| | |
|---|---|
| E-10, E-11, .. | Exciter 10, Exciter 11 |
| G-10, G-11, .. | Gate 10, Gate 11; Tor 10, Tor 11 |
| Id, Id-10, Id-11, .. | Identität, Kennzeichen Identität des Gate 10; Identität des am Gate 10 vom Exciter 10 auf der tiefen Frequenz ausgesendeten Kennzeichens; Identität des Gate 11; Identität des am Gate 11 vom Exciter 11 auf der tiefen Frequenz ausgesendeten Kennzeichens; |
| $msg_0$ | Meldungen von RFID-Tag 60 zu einem Controller 40 auf der hohen Frequenz enthaltend ein Kennzeichen ID eines Exciters |
| msg | bidirektional ausgetauschte Meldungen von einem RFID-Tag 60 zu einem Controller 40 auf der hohen Frequenz Kenn- zeichen ID eines Exciters |
| nn | Platzhalter in freiem Format |
| s | Weite des Wirkungsbereiches in [m] |
| 40 | Controller |
| 50 | Lastwagen, Lastkraftwagen; Container, Objekt, Ware, Ladungsträger |
| 60 | RFID-Tag auf Lastwagen, RFID-Tag in Container, RFID-Tag an Objekt |
| 70 | Förderband |
| 71 | Transportrichtung, Förderrichtung |
| 80 | Hintergrundsystem, zentrales Auswertesystem; Teil eines Logistiksystems |
| 90 | Wirkungsbereich eines Nahfeldes |
| 100 | Andockstelle, Rampe |
| | |
| BAKOM | Bundesamt für Kommunikation, 2501 Bienne |
| ISM | Industrial, Scientific and Medical |

**Liste der zitierten Schriften**

[1]    WO 2008/100430 A1 «Combined range and tag finder» Radar Corporation, San Ramon CA 94583 (US)

[2]    US 2002/153996 A1 «Method and apparatus for varying signals transmitted by a tag» Chan et al. Assignee: Savi Technology, Inc.

[3]    EP 1 210 693 B1 «Verfahren und System zur Registrierung von Billetten» Continental Automotive Switzerland Ltd

[4]    Der Einsatzvon RFID-Technik http://www.aim-d.de/ Industrieverband für Automatische Identifikation AIM; AIM Deutschland e.V. DE - 68623 Lampertheim

**Patentansprüche**

1.    Verfahren zur Ortsbestimmung (100, 70; G-10, G-11, .. ) eines einem Objekt (50) zugeordneten RFID-Tags (60), bei dem auf einer ersten Frequenz Meldungen (msg) zwischen RFID-Tags (60) und einem Controller (40) bidirektional ausgetauscht werden, wobei

- die Meldungen vom RFID-Tag (60) zum Controller eine das RFID-Tag kennzeichnende Information enthalten;
- der Controller (40) mit einem Hintergrundsystem (80) verbunden ist, das den Austausch der bidirektionalen Meldungen (msg, $msg_0$) steuert,

**gekennzeichnet durch** die Verfahrensschritte:

A von wengistens einem Exciter (E-10, E-11, .. ) wird auf einer zweiten gegenüber der ersten tieferen Frequenz ein individuelles Kennzeichen (Id, Id-10, Id-11) der Exciter (E-10, E-11, ..) ausgesendet;
B ein im Nahfeld eines Exciters (E-10, E-11, .. ) befindliches RFID-Tag (60) empfängt das Kennzeichen (Id-10, Id-11) des betreffenden Exciters (E-10, E-11, ..) und dieses Kennzeichen (Id, Id-10, Id-11, .. ) wird vom RFID-Tag (60) in einer Meldung ($msg_0$) auf der ersten Frequenz zum Controller (40) übertragen,
C mit im Hintergrundsystem (80) gespeicherten Datensätzen, die die Lage der Exciter (E-10, E-11, .. ) repräsentieren, wird der Ort (100, 70; G-10, G-11, .. ) des betreffenden RFID-Tags (60) bestimmt.

2.    Verfahren nach Anspruch 1,
**dadurch gekennzeichnet, dass**
im Verfahrensschritt B in der vom RFID-Tag (60) zum Controller (40) übertragenen Meldung ($msg_0$) zusätzlich eine Gültigkeitsdauer des Kennzeichens (Id, Id-10, Id-11) übertragen wird.

3.    Verfahren nach Anspruch 1 oder 2,
**dadurch gekennzeichnet, dass**
im Verfahrensschritt C vom Hintergrundsystem (80) eine Aussendung einer Meldung vom Controller (40) an das betreffende RFID-Tag (60) veranlasst wird, wonach der Empfang der mit dem Kennzeichen (Id-10, Id-11, .. ) des Exciters (E-10, E-11, .. ) vom Controller (40) empfangenen Meldung ($msg_0$) bestätigt wird.

4.    Verfahren nach einem der Ansprüche 1 bis 3,
**dadurch gekennzeichnet, dass**
sich die Objekte (50) mit den zugeordneten RFID-Tags (60) auf einem vorgegebenen Weg bewegen und sequentiell in das Nahfeld von wenigstens einem Exciter (E-10, E-11, .. ) gelangen und im Verfahrensschritt C **dadurch** die Reihenfolge der Objekte (50) bestimmt wird.

5.    Verfahren nach einem der Ansprüche 1 bis 4,
**dadurch gekennzeichnet, dass**
im Verfahrensschritt B die von einem RFID-Tag (60) mit dem Kennzeichen eines Exciters (E-10, E-11, .. ) versehenen Meldungen ($msg_0$) von mehr als einem Controller (40) empfangen werden.

6.    Verfahren nach einem der Ansprüche 1 bis 5,
**dadurch gekennzeichnet, dass**
im Verfahrensschritt A ein Exciter (E-10, E-11, .. ) für die Aussendung des individuellen Kennzeichens (Id-10, Id-11) einen Wirkungsbereich (90) mit einer maximalen Weite s aufweist, der durch die Einstellung der tieferen Frequenz folgender Beziehung unterliegt

$$s < \lambda/2\Pi ;$$

wobei $\lambda$ für die Wellenlänge der tieferen Frequenz steht.

7. Verfahren nach Anspruch 6,
   **dadurch gekennzeichnet, dass**
   der Wirkungsbereich (90) durch eine Einstellung des Sendepegels des Exciters (E-10, E-11, .. ) weiter reduziert wird.

8. System zur Ortsbestimmung (100, 70; G-10, G-11, .. ) eines einem Objekt (50) zugeordneten RFID-Tags (60), bei dem auf einer ersten Frequenz Meldungen (msg, $msg_0$) zwischen RFID-Tags (60) und einem Controller (40) bidirektional ausgetauscht werden, wobei

   - die Meldungen vom RFID-Tag (60) zum Controller eine das RFID-Tag kennzeichnende Information enthalten;
   - der Controller (40) mit einem Hintergrundsystem (80) verbunden ist, das den Austausch der bidirektionalen Meldungen (msg, $msg_0$) steuert,

   **dadurch gekennzeichnet, dass**

   A von wenigstens einem Exciter (E-10, E-11, .. ) auf einer zweiten gegenüber der ersten tieferen Frequenz eine individuelle Kennzeichen (Id, Id-10, Id-11) des wenigstens einen Exciter s (E-10, E-11, ..) ausgesendet wird;
   B ein im Nahfeld eines Exciters (E-10, E-11, .. ) befindliches RFID-Tag (60) empfängt das Kennzeichen (Id, Id-10, Id-11) des betreffenden Exciters (E-10, E-11, ..) und dieses Kennzeichen (Id-10, Id-11, .. ) wird vom RFID-Tag (60) in einer Meldung ($msg_0$) auf der ersten Frequenz zum Controller (40) übertragen,
   C mit im Hintergrundsystem (80) gespeicherten Datensätzen, die die Lage der Exciter (E-10, E-11, .. ) repräsentieren, wird der Ort (100, 70; G-10, G-11, .. ) des betreffenden RFID-Tags (60) bestimmt.

FIG 1

FIG 2

**Europäisches Patentamt**
**European Patent Office**
**Office européen des brevets**

## EUROPÄISCHER RECHERCHENBERICHT

**Nummer der Anmeldung**

EP 09 16 4845

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 122 684 A (BOSCH GMBH ROBERT [DE]) 8. August 2001 (2001-08-08) * das ganze Dokument * | 1,3-8 | INV. G06K17/00 |
| A | US 2005/258240 A1 (CHAPPIDI GOPINATH [IN] ET AL CHAPPIDI GOPINATH [IN] ET AL) 24. November 2005 (2005-11-24) * Absätze [0027] - [0052] * | 1,8 | |
| A | US 2006/055552 A1 (CHUNG KEVIN K [US] ET AL CHUNG KEVIN KWONG-TAI [US] ET AL) 16. März 2006 (2006-03-16) * das ganze Dokument * | 1,8 | |

**RECHERCHIERTE SACHGEBIETE (IPC)**

G06K

Der vorliegende Recherchenbericht wurde für alle Patentansprüche erstellt

| Recherchenort | Abschlußdatum der Recherche | Prüfer |
|---|---|---|
| München | 10. November 2009 | Schmidt, Rainer |

**ANHANG ZUM EUROPÄISCHEN RECHERCHENBERICHT
ÜBER DIE EUROPÄISCHE PATENTANMELDUNG NR.**

EP 09 16 4845

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-11-2009

| Im Recherchenbericht angeführtes Patentdokument | Datum der Veröffentlichung | Mitglied(er) der Patentfamilie | Datum der Veröffentlichung |
|---|---|---|---|
| EP 1122684 A | 08-08-2001 | DE 10004421 A1 | 09-08-2001 |
| US 2005258240 A1 | 24-11-2005 | KEINE | |
| US 2006055552 A1 | 16-03-2006 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008100430 A1
- US 20020153996 A1
- EP 1210693 B1
- CA 94583
- DE 68623